**Europäisches Patentamt**

**European Patent Office**

**Office européen des brevets**

(19)

(11) Veröffentlichungsnummer : **0 421 104 B1**

(12) # EUROPÄISCHE PATENTSCHRIFT

(45) Veröffentlichungstag der Patentschrift :
**28.10.92 Patentblatt 92/44**

(51) Int. Cl.⁵ : **F16B 13/06, F16B 13/12**

(21) Anmeldenummer : **90115986.3**

(22) Anmeldetag : **21.08.90**

(54) Spreizdübel und Verfahren zu seiner Herstellung.

(30) Priorität : **06.10.89 DE 3933353**

(43) Veröffentlichungstag der Anmeldung :
**10.04.91 Patentblatt 91/15**

(45) Bekanntmachung des Hinweises auf die
Patenterteilung :
**28.10.92 Patentblatt 92/44**

(84) Benannte Vertragsstaaten :
**AT BE CH DE DK ES FR GB IT LI NL SE**

(56) Entgegenhaltungen :
**DE-A- 2 711 845**

(73) Patentinhaber : "TOGE-DÜBEL" A. Gerhard
GmbH
Illesheimer Strasse 10
W-8500 Nürnberg 80 (DE)

(72) Erfinder : **Gerhard, Anton**
**Illesheimer Strasse 10**
**W-8500 Nürnberg 80 (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

**Beschreibung**

Die Erfindung betrifft einen Spreizdübel nach dem Oberbegriff des Anspruches 1 und ein Verfahren zur Herstellung des Spreizdübels.

Ein Spreizdübel der gattungsgemäßen Art ist aus der DE-PS 16 25 394 bekannt. Hierbei ist die dickwandige geschlitzte Spreizhülse an ihrem dem Kopf der Schraube abgewandten Einschubende mit einer nach außen sich erweiternden konischen, also kegelstumpfförmigen Schrägfläche versehen. Hieran schließt sich ein kreiszylindrischer Innenwandabschnitt an, dem eine sich in Richtung auf den Kopf der Schraube wiederum verjüngende weitere konische Schrägfläche folgt. Durch den Innenraum der Spreizhülse erstreckt sich der Schraubbolzen, der in einen konischen Spreizkörper eingreift, der am Einschubende der Spreizhülse mit einer ebenfalls konischen Spreizfläche gegen die Schrägfläche anliegt. Es ist ein weiterer Spreizkörper vorgesehen, der der Schrägfläche geringeren Durchmessers zugeordnet ist. Beide Spreizkörper sind über eine Abstandshülse miteinander verbunden. Der Vorteil dieses Spreizdübels liegt darin, daß er praktisch über seine gesamte Länge gleichmäßig spreizt. Andererseits ist er sehr aufwendig herzustellen. Darüber hinaus fallen die Spreizkörper und die Distanzhülsen aus der Spreizhülse heraus, wenn die Schraube herausgedreht wird.

Aus der DE-OS 27 11 845 ist ein Spreizdübel bekannt, der einen Spreizkörper mit mehreren in Längsrichtung hintereinander angeordneten Spreizflächen aufweist. Der Spreizkörper kann aus Metallblech gerollt sein, wobei diese Spreizflächen an Nocken ausgebildet sind, die aus der Wand des Spreizkörpers nach außen ausgestanzt sind. Um diesen Spreizkörper sind mehrere Spannbacken angeordnet, die mittels Spannringen zusammengehalten sind. Auch diese Spannbacken können aus Metallblech gestanzt sein, wobei kegelförmig verlaufende Nocken mit den Spreizflächen zugeordneten Schrägflächen vorgesehen sind. Auch hierbei ist der Spreizkörper nicht unverlierbar zwischen den Spannbacken gehalten. Darüber hinaus liegt ein Nachteil darin, daß die Spannringe beim Spreizen entweder zerreißen müssen oder aber aus elastischem Material bestehen müssen, was wiederum die Stabilität des Dübels beeinträchtigt.

Es ist allgemein bekannt, die Spreizhülsen von Spreizdübeln einstückig aus einem Blechzuschnitt durch Biegen herzustellen.

Der Erfindung liegt die Aufgabe zugrunde, einen Spreizdübel der gattungsgemäßen Art so auszugestalten, daß bei besonders einfachem Aufbau und besonders einfacher Herstellung der Spreizkörper unverlierbar in der Spreizhülse gehalten wird.

Diese Aufgabe wird erfindungsgemäß durch die Merkmale im Kennzeichnungsteil des Anspruches 1 gelöst. Dadurch daß einerseits die Spreizhülse in bekannter Weise einstückig hergestellt ist und daß andererseits die radial nach innen vorstehenden Erhöhungen der Spreizhülse in die entsprechenden Vertiefungen des Spreizkörpers eingreifen, kann der Spreizkörper auch bei einem Entfernen der Schraube nicht aus der Spreizhülse herausfallen.

Durch die Ausgestaltung nach Anspruch 2 wird eine besonders einfache und einfach herstellbare Ausgestaltung der Spreizhülse geschaffen, die insbesondere in der Kombination mit den Maßnahmen nach Anspruch 3 dazu führt, daß in besonders einfacher Weise der Spreizkörper unverdrehbar gegenüber der Spreizhülse in dieser angeordnet ist.

Die Maßnahmen nach Anspruch 4 führen dazu, daß die Spreizhülse im wesentlichen über ihre volle Länge gespreizt wird.

Die Ausgestaltung nach Anspruch 5 führt dazu, daß nur eine bezogen auf die Länge der Spreizhülse sehr kurze Schraube notwendig ist, daß also die Schraube nicht - wie üblich - die gesamte Spreizhülse in ihrer Länge durchsetzt.

Die Weiterbildung nach Anspruch 6 führt dazu, daß einerseits eine gute Verankerung des Spreizdübels im Mauerwerk oder Beton erreicht wird und daß andererseits der Dübel auch im zu befestigenden Teil sich gut verkeilt.

Anspruch 7 und 8 geben die einfachste Ausgestaltung für den Spreizkörper und die Spreizhülse an. Die erfindungsgemäße Ausgestaltung des Spreizdübels führt dazu, daß ein besonders einfaches Herstellungsverfahren nach Anspruch 10 angewendet werden kann.

Weitere Vorteile, Merkmale und Einzelheiten der Erfindung ergeben sich aus der nachfolgenden Beschreibung eines Ausführungsbeispiels anhand der Zeichnung. Es zeigt

Fig. 1 eine Spreizhülse eines Dübels nach der Erfindung, in einem Längsschnitt entsprechend der Schnittlinie I-I in Fig. 2,

Fig. 2 einen Querschnitt durch die Spreizhülse entsprechend der Schnittlinie II-II in Fig. 1 in stark vergrößertem Maßstab,

Fig. 3 eine Teil-Draufsicht auf die Spreizhülse in teilweise aufgebrochener Darstellung und in stark vergrößertem Maßstab,

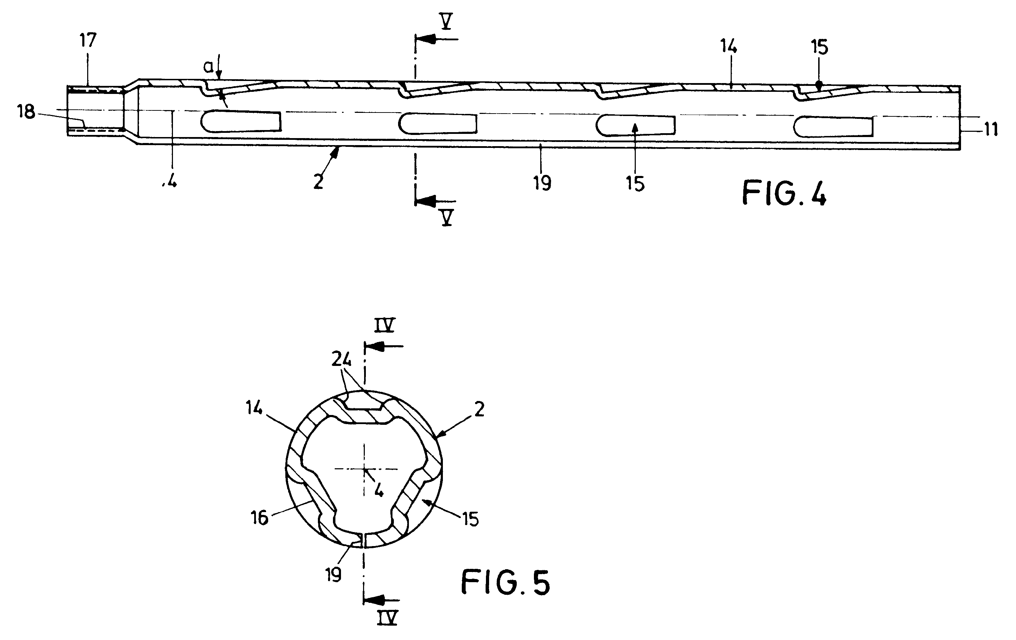

Fig. 4 einen Spreizkörper des Dübels im Längsschnitt entsprechend der Schnittlinie IV-IV in Fig. 5,

Fig. 5 einen Querschnitt durch den Spreizkörper gemäß der Schnittlinie V-V in Fig. 4 in stark vergrößertem Maßstab,

Fig. 6 den aus der Spreizhülse nach Fig. 1 bis 3 und dem Spreizkörper nach Fig. 4 und 5 gebildeten Dübel im Längsschnitt und

Fig. 7 einen Querschnitt durch den Dübel gemäß der Schnittlinie VII-VII in Fig. 6.

Der in der Zeichnung dargestellte Dübel besteht aus einer äußeren Spreizhülse 1, einem in dieser Spreizhülse 1 angeordneten und sich über einen großen Teil ihrer Länge erstreckenden hohlen Spreizkörper 2 und einer Schraube 3.

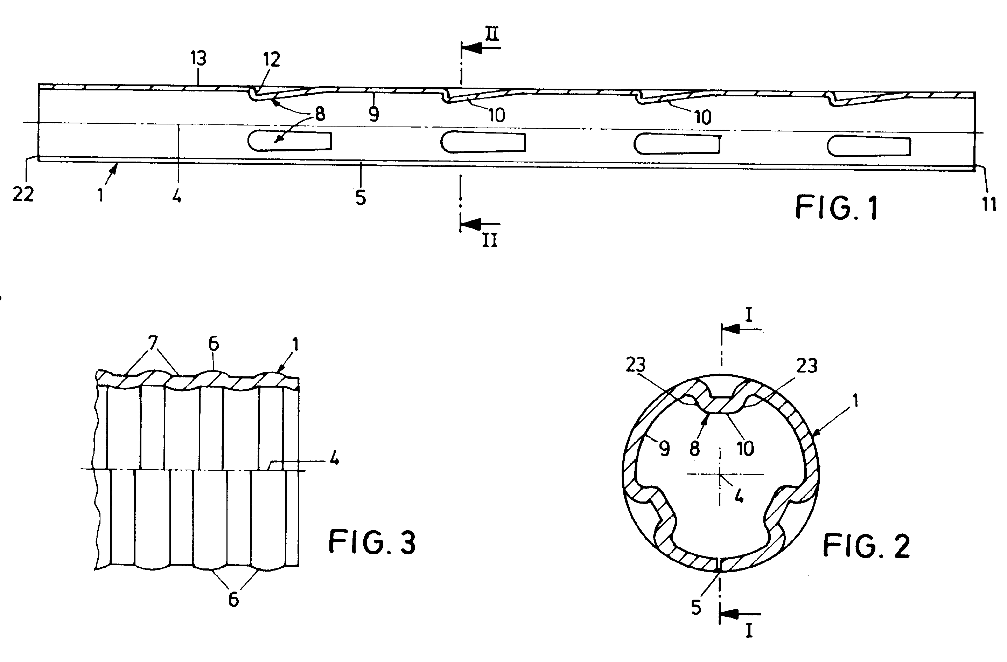

Die Spreizhülse 1 ist annähernd kreiszylindrisch ausgebildet und aus Blech geformt. Sie weist demzufolge einen sich über ihre volle Länge erstreckenden, parallel zur Mittel-Längs-Achse 4 verlaufenden Längs-Schlitz 5 auf. Sie ist - wie nur Fig. 3 entnehmbar ist - an ihrem Außenumfang mit einer ringförmigen Wellung versehen, die durch ringförmige Erhebungen 6 gebildet ist, deren radialer Abstand vom zwischen zwei Erhebungen 6 liegenden Wellengrund 7 0,1 bis 0,3 mm beträgt. Diese ringförmigen Erhebungen 6 geringer radialer Höhe dienen dazu, beim Spreizen der Spreizhülse 1 sich im Untergrund, also im Mauerwerk, Beton od.dgl. und im zu befestigenden Teil zu verankern bzw. zu verkeilen.

Wie aus den Fig. 1 und 2 hervorgeht, sind in der Spreizhülse 1 über deren Länge in gleichmäßigen Abständen verteilt und über ihren Umfang in gleichen Winkelabständen angeordnet radial nach innen, also zur Achse 4 hin gerichtete Erhöhungen 8 ausgebildet, die also auf der Außenwand der Spreizhülse 1 als Vertiefungen erscheinen. Diese Erhöhungen 8 begrenzen an der Innenfläche 9 der Spreizhülse 1 zur Achse 4 hin schwach geneigte Schrägflächen 10, wobei die jeweilige Schrägfläche 10 vom Einschubende 11 der Spreizhülse 1 her gesehen zur Achse 4 hin geneigt ist. Auf dem dem Einschubende 11 der Spreizhülse 1 jeweils abgewandten Ende der jeweiligen Erhöhung 8, an dem sich die Schrägfläche 10 am nächsten zur Achse 4 befindet, schließt sich ein kurzer Wandabschnitt 12 an, der angenähert senkrecht zur Achse 4 verläuft und wieder zur weitgehend zylindrischen Außenwand 13 der Spreizhülse 1 zurückführt.

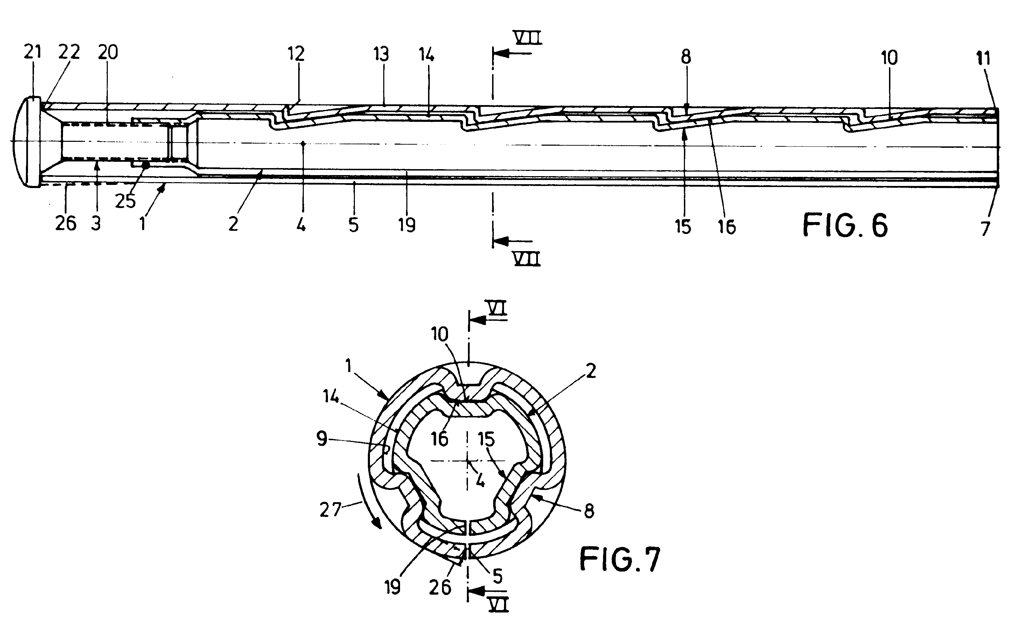

Der Spreizkörper 2 ist sehr ähnlich wie die Spreizhülse 1 ausgebildet. Er weist einen Außendurchmesser auf, der nur geringfügig kleiner ist als der Innendurchmesser der Spreizhülse 1. Der Spreizkörper 2 weist in seiner Außenfläche 14 Vertiefungen 15 auf, die jeweils eine außenliegende Spreizfläche 16 aufweisen. Diese Spreizflächen 16 sind jeweils - ebenfalls vom Einschubende 11 her gesehen - zur Achse 4 hin geneigt, und zwar um denselben Winkel a, wie die Schrägflächen 10. Die Vertiefungen 15 sind in gleicher Weise über die Länge des Spreizkörpers 2 und dessen Umfang angeordnet, wie die Erhöhungen 8 an der Spreizhülse 1. Die Vertiefungen 15 sind in Umfangsrichtung des Spreizkörpers 2 gesehen etwa so breit wie die Erhöhungen 8 an der Innenfläche 9 der Spreizhülse 1, so daß jeweils eine Erhöhung 8 in eine Vertiefung 15 eingreifen kann, wobei die jeweilige Schrägfläche 10 an einer zugeordneten Spreizfläche 16 anliegt, wie dies in Fig. 6 dargestellt ist, wo aus Gründen der zeichnerischen Vereinfachung nur eine Reihe von ineinandergreifenden Erhöhungen 8 und Vertiefungen 15 dargestellt ist.

Der Spreizkörper 2 weist an seinem dem Einschubende 11 abgewandten Ende eine einschnürte Gewindehülse 17 mit einem Innengewinde 18 auf. Der Spreizkörper 2 ist aus Blech gebogen und weist demzufolge eine Stoßfuge 19 auf.

Nach der Herstellung des Spreizkörpers 2 wird der mit den Erhöhungen 8 und den ringförmigen Erhebungen 6 versehene Blechzuschnitt der Spreizhülse 1 um den hohlen Spreizkörper 2 gebogen, wobei der Spreizkörper 2 zuvor so auf den Blechzuschnitt der Spreizhülse 1 gelegt ist, daß die Erhöhungen 8 in die Vertiefungen 15 eingreifen. Dann wird der Blechzuschnitt der Spreizhülse 1 um den Spreizkörper herumgebogen. Der Spreizkörper 2 liegt somit verdrehsicher in der Spreizhülse 1. Anschließend wird die Schraube 3 mit ihrem zylindrischen Gewindeabschnitt 20 in das Innengewinde 18 der Gewindehülse 17 des Spreizkörpers 2 geschraubt, bis der Kopf 21 der Schraube 3 gegen den benachbarten Rand 22 der Spreizhülse 1 anliegt. Wenn nach dem Einschieben des gesamten Dübels in ein Bohrloch die Schraube 3 angezogen wird, dann wird der Spreizkörper 2 in Richtung auf den Rand 22 der Spreizhülse 1, also von deren Einschubende 11 weggezogen, wodurch die Schrägflächen 10 von den Spreizflächen 16 radial nach außen gedrückt werden, wodurch die Spreizhülse 1 unter Vergrößerung ihres Schlitzes 5 aufgeweitet wird. Die Spreizhülse 1 wird im Mauerwerk oder Beton verspreizt, wobei die Erhebungen 6 sich in das Mauerwerk eindrücken. Eine Gefahr, daß die Gewindehülse 17 hierbei aufgebogen wird, besteht nicht, da der gesamte Spreizkörper 2 bei Aufspreizen der Spreizhülse 1 über seinen Umfang, also tangential, zusammengedrückt wird.

Die Spreizflächen 16 des Spreizkörpers 2 können sich über den gesamten Umfang des Spreizkörpers 2 erstrecken, insgesamt also kegelstumpfförmig ausgebildet sein. Eine solche Ausgestaltung hat allerdings den Nachteil, daß der Spreizkörper 2 nicht verdrehsicher in der Spreizhülse 1 angeordnet ist, sondern daß dann eine gesonderte Verdrehsicherung vorgesehen werden muß. Die Verdrehsicherung beim dargestellten Ausführungsbeispiel wird dadurch erreicht, daß die etwa parallel zur Achse 4 verlaufenden Seitenwände 23 der jeweiligen Erhöhung 8 zwischen den etwa gleichgerichtet verlaufenden Seitenflanken 24 der entsprechenden Vertiefung 15 geführt sind, wie Fig. 7 entnehmbar ist.

Der Durchmesser des Gewindeabschnitts 20 der Schraube 3 ist kleiner als der kleinste radiale Abstand der Vertiefungen 15 von der Achse 4.

Aus Sicherheitsgründen kann die Gewindehülse 17 im Bereich ihrer Stoßfuge 19 mit einer punkt- oder linienförmigen Verschweißung 25 fest verschlossen sein.

Um das Einschieben der Spreizhülse 1 in ein Bohrloch zu erleichtern, endet die Spreizhülse 1 an ihrem Einschubende 11 mit einem Wellengrund 7, was in Fig. 6 lediglich durch die Bezugsziffer 7 angedeutet ist.

Als zusätzliche Verdrehsicherung ist die Spreizhülse 1 im Bereich der Schraube 3, also ausgehend von ihrem Rand 22 mit einer Ausbiegung 26 versehen. Diese Ausbiegung 26 steht im Bereich des Schlitzes 5 über den Außenumriß der Spreizhülse 1 vor. Die Ausbiegung 26 liegt auf der in Drehrichtung 27 der Schraube 3 vorn liegenden Seite des Schlitzes 5. Die Ausbiegung 26 erstreckt sich höchstens bis zur Gewindehülse 17 bei nicht verspreiztem Dübel, wie in Fig. 6 durch eine gestrichelte Linie angedeutet ist, da die Ausbiegung 26 an sich in Fig. 6 nicht sichtbar ist.

**Patentansprüche**

1. Spreizdübel, bestehend aus einer mit einem durchgehenden Längs-Schlitz (5) versehenen, einstückigen Spreizhülse (1), einem in dieser angeordneten Spreizkörper (2) und einer in ein Gewinde (18) im Spreizkörper (2) eingreifenden, sich mit ihrem Kopf (21) gegen einen Rand (22) der Spreizhülse (1) abstützenden Schraube (3), wobei der Spreizkörper (2) in seiner Außenfläche (14) mit mehreren in Längsrichtung hintereinander angeordneten Spreizflächen (16) versehen ist, die sich gegen zugeordnete Schrägflächen (10) an der Innenfläche (9) der Spreizhülse (1) abstützen, dadurch gekennzeichnet, daß die Schrägflächen (10) an radial nach innen gerichteten Erhöhungen (8) der Spreizhülse (1) ausgebildet sind, die in die Spreizflächen (16) begrenzende Vertiefungen (15) des Spreizkörpers (2) eingreifen.

2. Spreizdübel nach Anspruch 1, dadurch gekennzeichnet, daß über den Umfang der Spreizhülse (1) mehrere Erhöhungen (8) vorgesehen sind.

3. Spreizdübel nach Anspruch 1 oder 2, dadurch gekennzeichnet, daß über den Umfang des Spreizkörpers (2) mehrere den Erhöhungen (8) angepaßte Vertiefungen (16) vorgesehen sind.

4. Spreizdübel nach einem der Ansprüche 1 bis 3, dadurch gekennzeichnet, daß die Erhöhungen (8) etwa in Längsrichtung verlaufende Seitenwände (23) aufweisen, die an entsprechenden Seitenflanken (24) der Vertiefungen (15) geführt sind.

5. Spreizdübel nach einem der Ansprüche 1 bis 4, dadurch gekennzeichnet, daß der Spreizkörper (2) an seinem dem Kopf (21) der Schraube (3) zugewandten Ende mit einer Gewindehülse (17) für die Schraube (3) versehen ist.

6. Spreizdübel nach einem der Ansprüche 1 bis 5, dadurch gekennzeichnet, daß die Spreizhülse (1) auf ihrer Außenwand (13) mit ringförmigen Erhebungen (6) geringer radialer Erstreckung versehen ist.

7. Spreizdübel nach einem der Ansprüche 1 bis 6, dadurch gekennzeichnet, daß der Spreizkörper (2) aus einem einstückigen Blechzuschnitt gebogen ist.

8. Spreizdübel nach einem der Ansprüche 1 bis 7, dadurch gekennzeichnet, daß die Spreizhülse (1) aus einem einstückigen Blechzuschnitt gebogen ist.

9. Verfahren zur Herstellung eines Spreizdübels nach einem der Ansprüche 1 bis 8, dadurch gekennzeichnet, daß ein Blechzuschnitt für die Spreizhülse (1) mit Schrägflächen (10) versehen und anschließend um den fertigen Spreizkörper (2) gebogen wird.

**Claims**

1. Expanding dowel, consisting of an expanding sleeve (1) in one piece provided with a continuous longitudinal slot (5), of an expanding body (2) arranged in the expanding sleeve (1) and of a screw (3) engageing with a thread (18) in the expanding body (2) and supporting with its head (21) against an edge (22) of the expanding sleeve (1), whereby the expanding body (2) is provided in its outer surface (14) with several expanding surfaces (16), which are arranged one after the other in longitudinal direction, which support at the inner surface (9) of the expanding sleeve (1) against associated inclined surfaces (10), characterized in that the inclined surfaces (10) are formed at elevations (8) directed radially inwards of the expanding sleeve (1), which elevations (8) engage with recesses (15) of the expanding body (2), which delimit the expanding surfaces (16).

2. Expanding dowel according to claim 1, characterized in that several elevations (8) are provided over the circumference of the expanding sleeve (1).

3. Expanding dowel according to claim 1 or 2, characterized in that several recesses (16) adapted to the elevations (8) are provided over the circumference of the expanding body (2).

4. Expanding dowel according to one of claims 1 to 3, characterized in that the elevations (8) comprise side walls (23) running approximately in longitudinal direction, which are guided at corresponding side flanks (24) of the recesses (15).

5. Expanding dowel according to one of claims 1 to 4, characterized in that the expanding body (2) at its end facing the head (21) of the screw (3) is provided with a threaded sleeve (17) for the screw (3).

6. Expanding dowel according to one of claims 1 to 5, characterized in that the expanding sleeve (1) is provided on its outer wall (13) with annular projections (6) of small radial extension.

7. Expanding dowel according to one of claims 1 to 6, characterized in that the expanding body (2) is bent from a sheet blank which is formed in one piece.

8. Expanding dowel according to one of claims 1 to 7, characterized in that the expanding sleeve (1) is bent from a sheet blank which is formed in one piece.

9. Method for the manufacturing of an expanding dowel according to one of claims 1 to 8, characterized in that a sheet blank for the expanding sleeve (1) is provided with inclined surfaces (10) and is bent subsequently around the finished expanding body (2).

**Revendications**

1. Cheville expansible, constituée d'un manchon expansible d'une pièce (1), doté d'une fente longitudinale traversante (5), d'un corps expansible (2) disposé dans ce manchon et d'une vis (3) s'engageant dans un filetage (18) dans le corps expansible (2) et s'appuyant par sa tête (21) contre un bord (22) du manchon expansible (1), le corps expansible (2) étant doté, sur sa surface extérieure (14), de plusieurs faces expansibles (16) qui se succèdent en direction longitudinale et s'appuient contre des faces inclinées associées (10) sur la surface intérieure (9) du manchon expansible (1), **caractérisée** en ce que les faces inclinées (10) sont configurées sur des bossages (8) du manchon expansible (1) qui sont dirigés radialement vers l'intérieur et s'engagent dans des renfoncements (15) du corps expansible (2) qui délimitent les faces expansibles (16).

2. Cheville expansible selon la revendication 1, **caractérisée** en ce que plusieurs bossages (8) sont prévus sur la périphérie du manchon expansible (1).

3. Cheville expansible selon la revendication 1 ou 2,

caractérisée en ce que plusieurs renfoncements (16), adaptés aux bossages (8), sont prévus sur la périphérie du corps expansible (2).

4. Cheville expansible selon l'une des revendications 1 à 3, **caractérisée** en ce que les bossages (8) présentent des parois latérales (23), qui s'étendent approximativement en direction longitudinale et sont guidées contre des flancs latéraux correspondants (24) des renfoncements (15).

5. Cheville expansible selon l'une des revendications 1 à 4, **caractérisée** en ce que le corps expansible (2) est pourvu, à son extrémité tournée vers la tête (21) de la vis (3), d'une douille filetée (17) pour la vis (3).

6. Cheville expansible selon l'une des revendications 1 à 5, **caractérisée** en ce que le manchon expansible (1) est doté, sur sa paroi extérieure (13), de bosses annulaires (6) de faible étendue radiale.

7. Cheville expansible selon l'une des revendications 1 à 6, **caractérisée** en ce que le corps expansible (2) est réalisé en courbant une ébauche en tôle d'une pièce.

8. Cheville expansible selon l'une des revendications 1 à 7, **caractérisée** en ce que le manchon expansible (1) est réalisé en courbant une ébauche en tôle d'une pièce.

9. Procédé de fabrication d'une cheville expansible selon l'une des revendications 1 à 8, **caractérisé** en ce qu'une ébauche en tôle pour le manchon expansible (1) est dotée de faces inclinées (10), puis est courbée autour du corps expansible (2) achevé.

FIG. 1

FIG. 3

FIG. 2

EP 0 421 104 B1

FIG.4

FIG.5

EP 0 421 104 B1

FIG.6

FIG.7